# EUROPEAN PATENT APPLICATION

(11) **EP 4 686 607 A1**
(43) Date of publication of application: **04.02.2026**
(21) Application number: 25190051.0
(22) Date of filing: 17.07.2025
(51) Int. Cl.: B60R 1/04, B60R 11/04

(54) **AUXILIARY STRUCTURE FOR VEHICLE WINDSHIELD**

(30) Priority: 01.08.2024 JP 2024125577
(71) Applicant: MAZDA MOTOR CORPORATION, Hiroshima 730-8670 (JP)
(72) Inventor: Yakushinji, Atsushi, Aki-gun, Hiroshima, 730-8670 (JP)
(74) Representative: Lorenz Seidler Gossel Part. mbB

(57) **Abstract**

[Problem] To provide an auxiliary structure for a vehicle windshield capable of reducing a feeling of pressure given to an occupant and securing a field of view of the occupant.

[Solution] An auxiliary structure of a vehicle windshield includes: a mirror support structure 20 that supports a rear-view mirror 5; a plurality of electronic devices (a rain sensor 32 and a communication antenna 33) aligned in a vehicle width direction; a plurality of wire harnesses (a sensor wire harness 43 and an antenna wire harness 44) that extend from the electronic devices; an auxiliary cover 60 that covers the mirror support structure 20 and the electronic devices; and a harness cover 70 that accommodates a plurality of wire harnesses. The auxiliary cover 60 is formed in a shape that protrudes in a vehicle rear direction with substantially the same position in the vehicle width direction as the mirror support structure 20 being a vertex, and includes a cover rear wall portion 64 in which a lead-out hole 60a for leading out the wire harness to the harness cover 70 is provided in a vertex portion 641.

## Description

### [Technical Field]

The present invention relates to an auxiliary structure for a vehicle windshield that includes a mirror support structure for supporting a rear-view mirror and various sensors on an upper portion of vehicle windshield glass, for example.

### [Background Art]

In a vehicle such as an automobile, as a vehicle driving assistance system that assists with driving operation by a driver, for example, an advanced driver-assistance system that partially intervenes in the driving operation by the driver, or an automatic driving system that takes over the driving operation from the driver under a predetermined condition to perform automatic driving is provided.

In the vehicle including this driving assistance system, for example, as in Patent Literature 1, an auxiliary device that detects a surrounding situation of the vehicle is frequently provided on an inner surface upper portion of windshield glass.

More specifically, in Patent Literature 1, an auxiliary device is disclosed that supports a rear-view mirror and integrally covers a mirror support structure fixed to the windshield glass, a humidity sensor detecting humidity, and a camera imaging surroundings of the vehicle with a large auxiliary cover that bulges to a vehicle front side from a front end of a roof trim.

By the way, recently, there is a need for suppressing a total vehicle height to be low in order to improve merchantability of the vehicle or reduce air resistance.

However, when the total vehicle height is suppressed to be low, the auxiliary device that is provided on the upper portion of the windshield glass is positioned near an occupant's head in a vehicle up-down direction.

Thus, the auxiliary device covered with the auxiliary cover that bulges to a vehicle front side from a front end of the roof trim as in Patent Literature 1 possibly gives the occupant, who is seated on a front seat of the vehicle, a feeling of pressure, and possibly makes it difficult for the occupant who is seated on the front seat to visually recognize a situation in front of the vehicle due to a narrowed field of view of the occupant by the auxiliary device.

### [Citation List]

### [Patent Literature]

[Patent Literature 1] JP2017-71334A

### [Summary of Invention]

### [Technical Problem]

In view of the above-described problems, an object of the invention is to provide an auxiliary structure for a vehicle windshield capable of reducing a feeling of pressure given to an occupant and securing a field of view of the occupant.

### [Solution to Problem]

The invention is an auxiliary structure for a vehicle windshield that is configured to be fixed as an auxiliary device to an inner surface upper portion of windshield glass of a vehicle, and includes: a bracket, at a position with a predetermined distance on a vehicle front side from a front header of the vehicle, the bracket being configured to be fixed to an inner surface of the windshield glass; a mirror support structure that is fixed to the bracket and supports a rear-view mirror; a plurality of electronic devices that is aligned in a vehicle width direction with the mirror support structure being interposed therebetween and is fixed to the bracket; a plurality of wire harnesses that extend in a vehicle rear direction from the electronic devices and is routed to a vehicle lower side of the front header; an auxiliary cover that is attached to the bracket and covers the mirror support structure and the electronic devices; and a harness cover that has a substantially concave groove shape, extends in a vehicle front-rear direction from the auxiliary cover to the front header and accommodates the plurality of wire harnesses, in which the auxiliary cover is formed in a shape that protrudes in a vehicle rear direction with substantially the same position in the vehicle width direction as the mirror support structure being a vertex, and includes a cover rear wall portion in which a lead-out hole for leading the wire harness to the harness cover is provided in the vertex. In other words, the auxiliary cover includes, in an area around the mirror support structure, a funnel-like wall structure becoming narrower towards the rear side and/or towards the harness cover to guide the wire harnesses coming from the electronic devices into the wire harness. More particularly, a rearside wall portion of the auxiliary cover may have a shape similar to a double-pitch roof or a funnel or hopper to become narrower towards the harness cover.

The front header refers to a body frame member, to which an upper edge of the windshield glass is fixed.

The bracket is preferably a bracket in which a portion to which the mirror support structure is fixed and a portion to which the electronic device is fixed are formed as separate bodies, or a bracket in which the portion to which the mirror support structure is fixed and the portion to which the electronic device is fixed are integrally formed.

The electronic device is preferably a sensor, such as a camera imaging a situation in front of the vehicle or a rain sensor detecting rain, an antenna performing inter-vehicular communication or communicating with an infrastructure facility around the vehicle, or the like.

The harness cover refers to a cover that is formed separately from the auxiliary cover, or a cover that is formed integrally with the auxiliary cover.

According to the invention, since the lead-out hole is provided in the vertex of the cover rear wall portion that is formed in the shape protruding in the vehicle rear direction, the wire harnesses that extend from the plurality of electronic devices aligned in the vehicle width direction with the mirror support structure being interposed therebetween can be gathered on the vehicle rear side of the mirror support structure and led out to the harness cover.

Thus, compared to a case where the wire harnesses are routed substantially linearly in the plan view from the electronic devices to the front header, in the auxiliary structure for the vehicle windshield, the length in the vehicle width direction of the harness cover can be reduced significantly.

In this way, in the auxiliary structure for the vehicle windshield, not only a transmission region can be formed in the windshield glass between the auxiliary cover and the front header in a manner to be adjacent to the harness cover in the vehicle width direction and formed to allow an occupant who is seated on a front seat to visually recognize a situation in front of the vehicle, but also the large transmission region can be secured.

As a result, compared to a case where the cover rear wall portion is located near the front header, in the auxiliary structure for the vehicle windshield, it is possible to reduce the feeling of pressure given to the occupant by the transmission region and to secure the wide field of view of the occupant.

In addition, in the auxiliary structure for the vehicle windshield, since the plurality of wire harnesses can be gathered at substantially the same positions in the vehicle width direction in the mirror support structure, substantially the same routing path of the wire harness can be adopted for a right-hand drive vehicle and a left-hand drive vehicle, and components can be shared among the right-hand drive vehicle and the left-hand drive vehicle.

According to a preferred embodiment of the invention, the electronic device may be set as a first electronic device, and the wire harness may be set as a first wire harness. The ausxiliary structure may further include: a second electronic device that is disposed on a vehicle front side of the mirror support structure and is fixed to the bracket; and a second wire harness that is connected to the second electronic device from the vehicle rear side and is accommodated in the harness cover via the lead-out hole, in which the mirror support structure may include a mirror support columnar portion that extends in a vehicle down direction from an upper end fixed to the bracket, the mirror support columnar portion may have an opening that penetrates along the vehicle front-rear direction, and the second wire harness may be routed to the vehicle rear side of the mirror support columnar portion from the vehicle front side of the mirror support columnar portion through the opening. In other words, a through hole may go through the upright mirror support columnar portion in the front-rear direction, and thus, the wire harness may go through such through hole in the mirror support columnar portion.

According to this configuration, since the second wire harness, which is connected to the second electronic device, is routed in a vehicle rear direction via the opening of the mirror support columnar portion, not only the second wire harness can be routed substantially linearly in the plan view, but also the second electronic device, the mirror support structure, and the second wire harness can be disposed on the substantially straight line in the plan view along the vehicle front-rear direction.

In this way, in the auxiliary structure for the vehicle windshield, the second electronic device can be disposed near the mirror support columnar portion of the mirror support structure in the vehicle front-rear direction. Thus, it is possible to dispose the second electronic device and the second wire harness on the upper portion of the windshield glass without enlarging the auxiliary cover.

Thus, the auxiliary structure for the vehicle windshield can achieve multi-functionality with the first electronic device and the second electronic device while simultaneously reducing the feeling of pressure given to the occupant and securing the field of view of the occupant.

Furthermore, the mirror support structure may include: a mirror support columnar portion that extends in a vehicle down direction from an upper end fixed to the bracket; and a mirror arm portion that extends in a vehicle rear direction from the mirror support columnar portion and supports the rear-view mirror in a freely swingable manner, and the cover rear wall portion may be formed in a shape that does not overlap a swing range of the rear-view mirror centered on a coupling portion with the mirror arm portion of the mirror support structure in a plan view, and may be formed with an arm portion insertion hole through which a mirror arm portion of the mirror support structure is inserted in a lower portion of the vertex.

According to this configuration, since the arm portion insertion hole is formed in the lower portion of the vertex in the cover rear wall portion, the cover rear wall portion of the auxiliary cover can be disposed to oppose the rear-view mirror in the vehicle front-rear direction. As a result, in the auxiliary structure for the vehicle windshield, the auxiliary cover is suppressed from protruding in the vehicle down direction from the lower end of the rear-view mirror.

As a result, in the auxiliary structure for the vehicle windshield, since the auxiliary cover is less likely to enter the field of view of the occupant, it is possible to stably reduce the feeling of pressure given to the occupant and to secure the wide field of view of the occupant.

In addition, the cover rear wall portion is located on the vehicle front side of the rear-view mirror. Accordingly, compared to a case where the cover rear wall portion is located at substantially the same position as the rear-view mirror in the vehicle front-rear direction, in the auxiliary structure for the vehicle windshield, it is possible to secure the large transmission region that is formed in the windshield glass.

### [Advantageous Effects of Invention]

According to the invention, it is possible to provide the auxiliary structure for the vehicle windshield capable of reducing the feeling of pressure given to the occupant and securing the field of view of the occupant.

### [Brief Description of Drawings]

[FIG. 1] FIG. 1 is an external perspective view illustrating external appearance of the vicinity of an auxiliary device as viewed from the inside of a cabin.
[FIG. 2] FIG. 2 is a bottom view in which the external appearance of the vicinity of the auxiliary device is illustrated in a bottom view.
[FIG. 3] FIG. 3 is a cross-sectional view that is taken along an arrow A-A in FIG. 2.
[FIG. 4] FIG. 4 is an external perspective view illustrating the external appearance of the auxiliary device in a state where a rear-view mirror and a cover member are removed.
[FIG. 5] FIG. 5 is a plan view in which the external appearance of the auxiliary device is illustrated in a plan view.
[FIG. 6] FIG. 6 is a plan view in which the auxiliary device, from which a camera bracket is removed, in the plan view.
[FIG. 7] FIG. 7 is an external perspective view illustrating external appearance of an auxiliary cover as viewed from the inside of the cabin.
[FIG. 8] FIG. 8 is a view illustrating a step of connecting a camera wire harness to a camera unit.
[FIG. 9] FIG. 9 is a cross-sectional view of the auxiliary device that is taken along the arrow A-A.
[FIG. 10] FIG. 10 is a view illustrating a mirror support structure.
[FIG. 11] FIG. 11 is a plan view illustrating external appearance of a cover member in the plan view.
[FIG. 12] FIG. 12 is a view illustrating a relationship between the rear-view mirror and the auxiliary cover.
[FIG. 13] FIG. 13 is a plan view in which external appearance of an auxiliary device in another embodiment is illustrated in the plan view.

### [Description of Embodiments]

An embodiment of the invention will be described below with reference to the drawings.

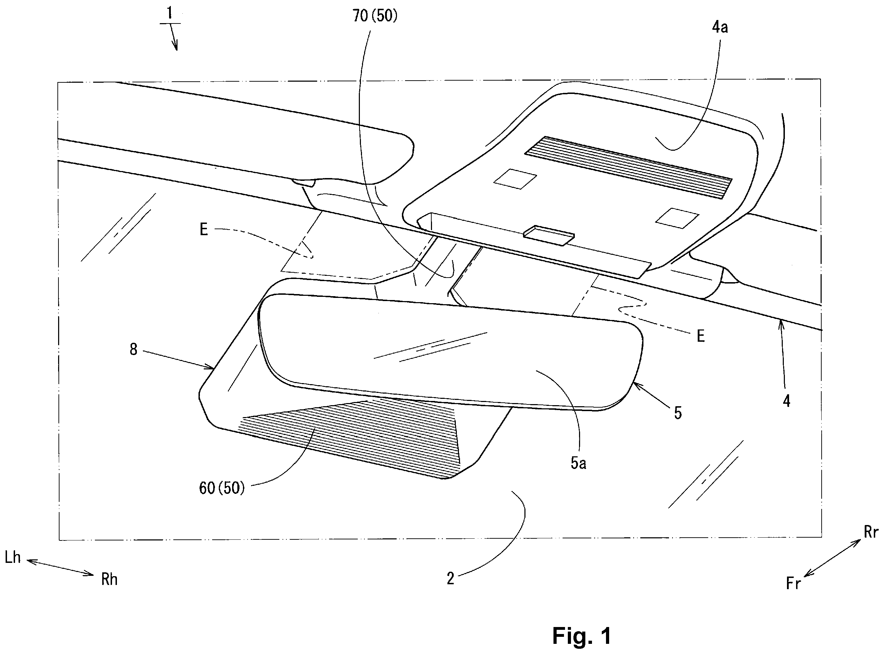

In the present embodiment, an auxiliary structure for a vehicle windshield that includes, as auxiliary devices 8, a mirror support structure 20 for supporting a rear-view mirror 5, a sensor, and the like in an upper portion of windshield glass 2 of a vehicle 1 is described with reference to FIGs. 1 to 12.

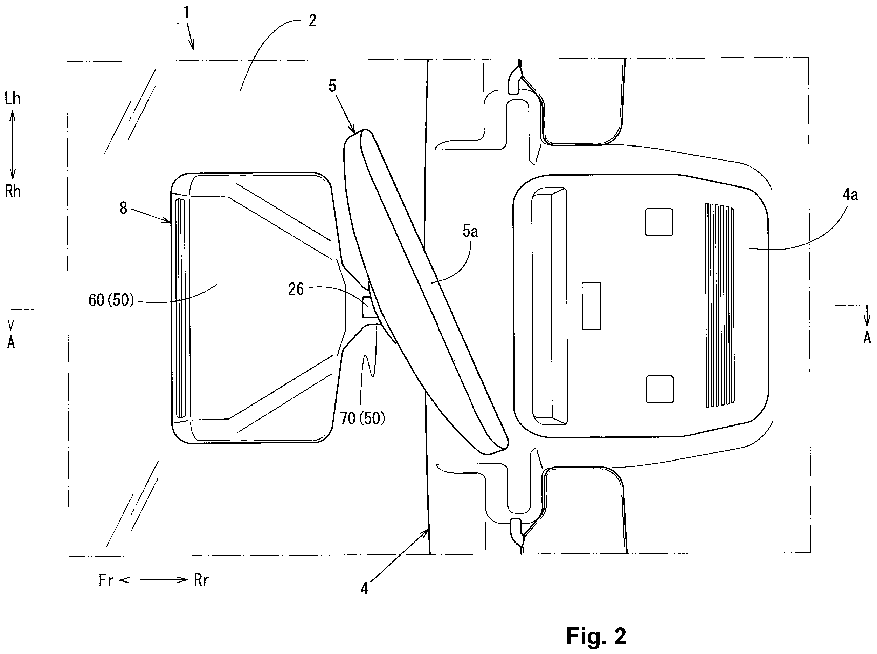

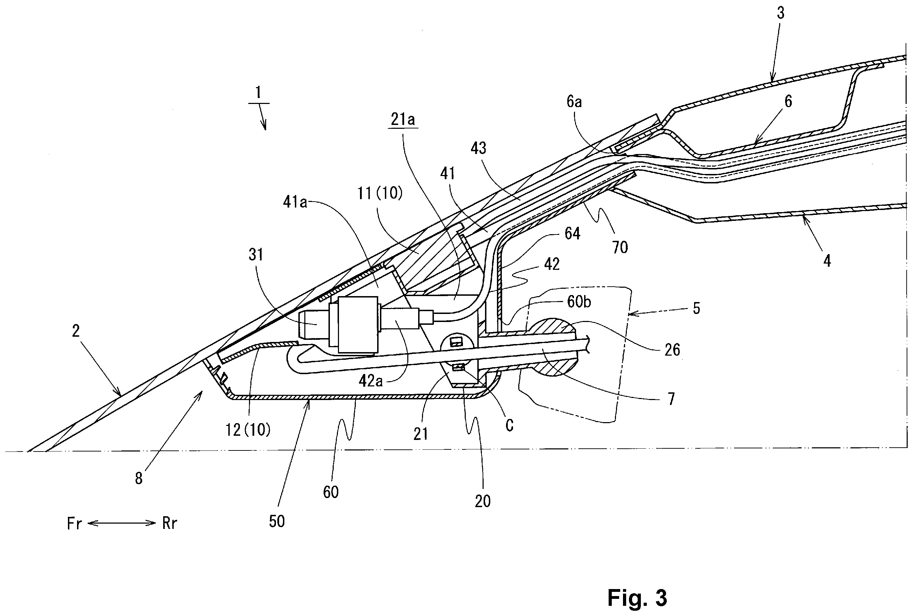

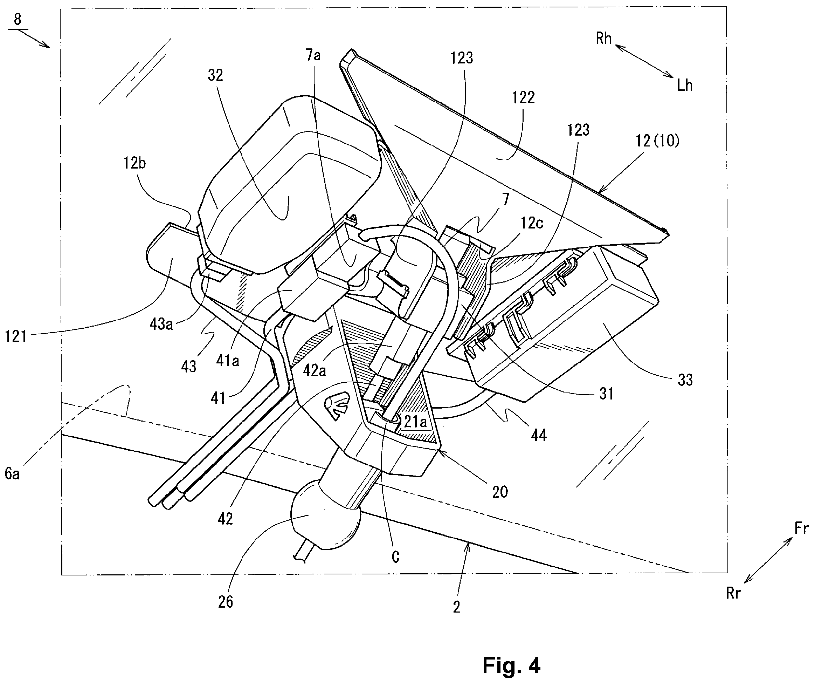

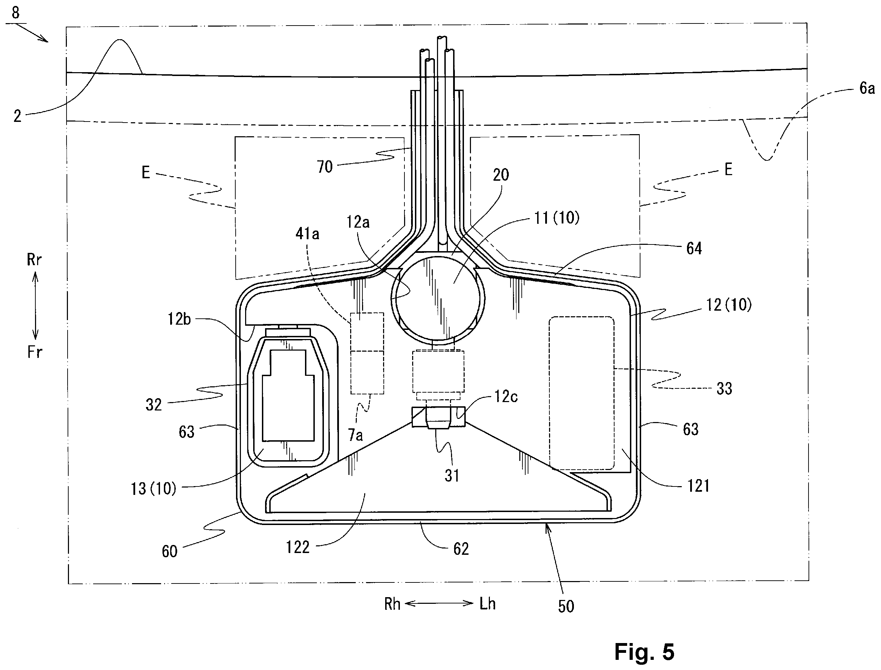

FIG. 1 is an external perspective view of the vicinity of the auxiliary device 8 as viewed from the inside of a cabin, FIG. 2 is a bottom view of the vicinity of the auxiliary device 8, FIG. 3 is a cross-sectional view that is taken along an arrow A-A in FIG. 2, FIG. 4 is an external perspective view of the auxiliary device 8 in a state where the rear-view mirror 5 and a cover member 50 are removed, and FIG. 5 is a plan view of the auxiliary device 8.

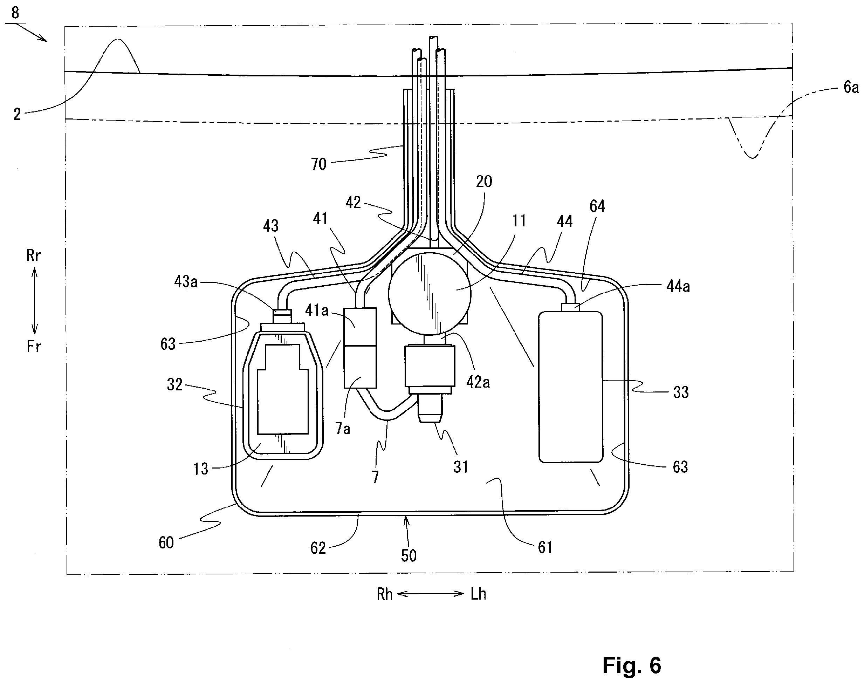

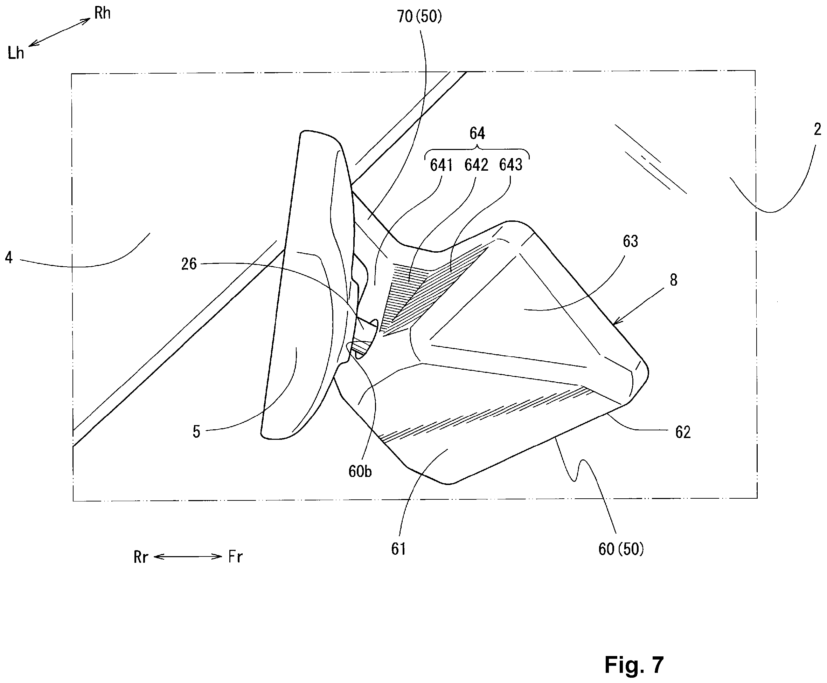

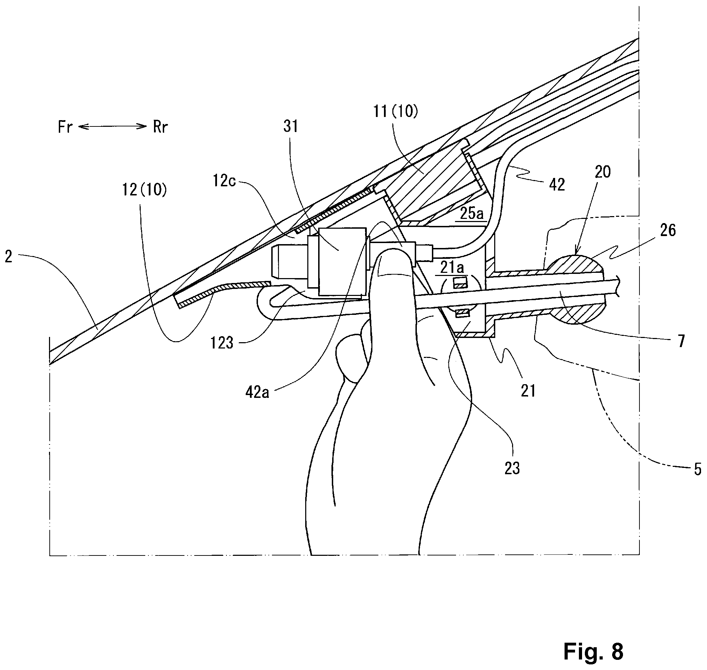

Furthermore, FIG. 6 is a plan view of the auxiliary device 8, from which a camera bracket 12 is removed, FIG. 7 is an external perspective view of an auxiliary cover 60 as viewed from inside of the cabin, and FIG. 8 is a view illustrating a step of connecting a camera wire harness 42 to a camera unit 31.

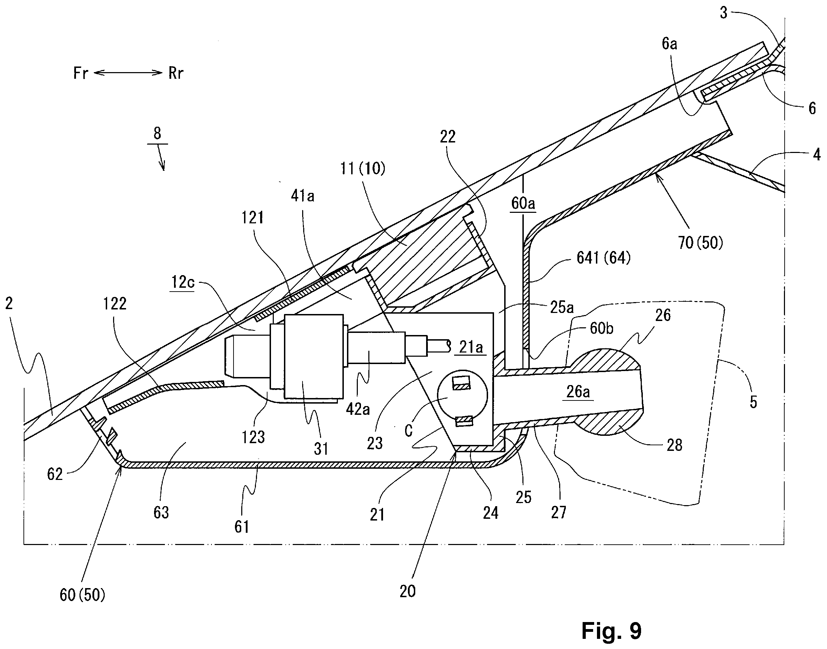

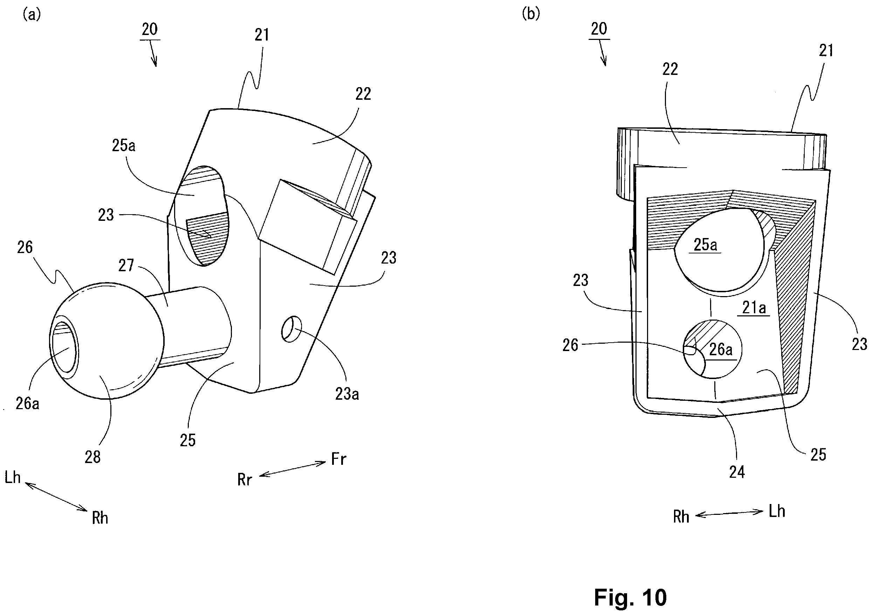

Moreover, FIG. 9 is a cross-sectional view of the auxiliary device 8 that is taken along the arrow A-A, FIG. 10 is a view illustrating the mirror support structure 20, FIG. 10(a) is an external perspective view of the mirror support structure 20 as viewed from a vehicle rear side, and FIG. 10(b) is an external perspective view of the mirror support structure 20 as viewed from a vehicle front side.

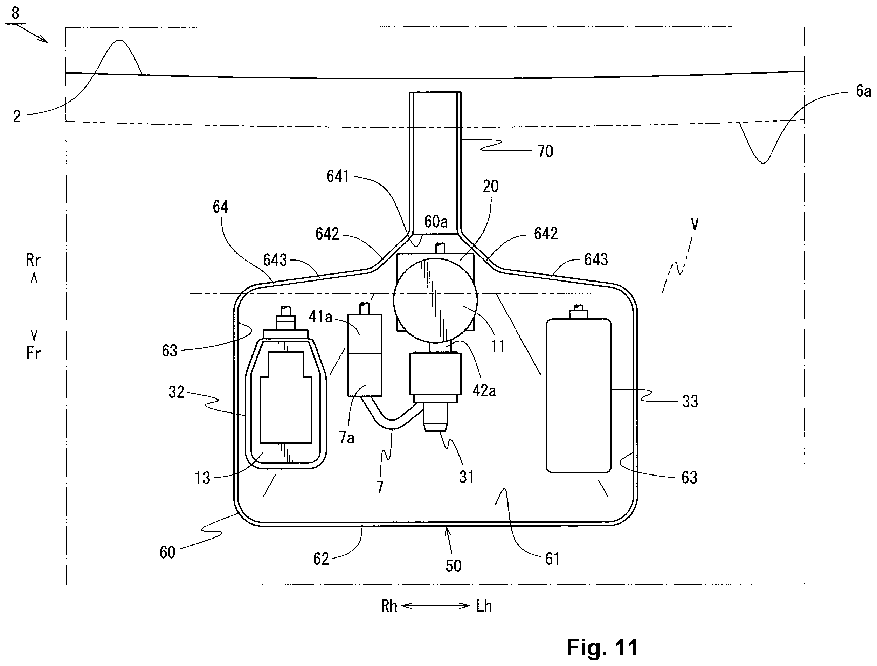

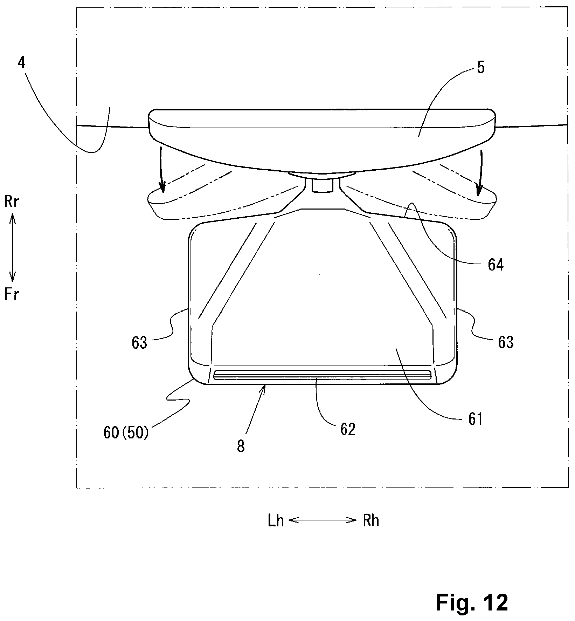

In addition, FIG. 11 is a plan view of the cover member 50, and FIG. 12 is a view illustrating a relationship between the rear-view mirror 5 and the auxiliary cover 60.

In order to clarify the illustration, the rear-view mirror 5 is illustrated by two-dot chain lines in FIGs. 3, 8, and 9. In FIGs. 4 to 6 and 11, an upper edge of the windshield glass 2 is illustrated by solid lines, and a front edge 6a of a front header 6 is illustrated by two-dot chain lines.

In addition, in order to clarify the illustration, four wire harnesses are not illustrated in FIGs. 9 and 11.

In the drawings, arrows Fr and Rr indicate a vehicle front-rear direction, the arrow Fr indicates a vehicle front direction, and the arrow Rr indicates a vehicle rear direction. Furthermore, arrows Rh and Lh indicate a vehicle width direction, the arrow Rh indicates a right direction in the vehicle width direction, and the arrow Lh indicates a left direction in the vehicle width direction.

First, the vehicle 1 in the present embodiment is a vehicle whose total height is suppressed to be low such that a front portion of a roof panel 3 (see FIG. 3) defining an external design surface is brought closer to a head of an occupant who is seated on a front seat in a vehicle up-down direction.

As illustrated in FIGs. 1 and 2, in an upper portion of a front portion of this vehicle 1, the windshield glass 2 that divides the inside of the cabin and a space in front of the vehicle, the roof panel 3 (see FIG. 3) that constitutes a roof of the vehicle 1 in a manner to continue from the windshield glass 2, a roof trim 4 that covers a ceiling of the cabin, and the rear-view mirror 5 that is supported by the windshield glass 2 via the mirror support structure 20, which will be described below are provided.

More specifically, the windshield glass 2 is so-called front windshield glass that is fixedly bonded to a body frame member of the vehicle 1.

Both ends of this windshield glass 2 in the vehicle width direction are fixedly bonded to left and right front pillars, each of which extend in the vehicle up-down direction, and a lower end thereof is fixedly bonded to a cowl panel that couples lower ends of the front pillars.

Furthermore, as illustrated in FIG. 3, an upper end of the windshield glass 2 is fixedly bonded, via the roof panel 3, to a flange portion (not denoted by a reference sign) on a vehicle front side of the front header 6 that couples upper ends of the front pillars.

Here, as illustrated in FIG. 3, the front header 6 has a substantially hat-shaped cross section in which a cross-sectional shape in a vertical cross section along the vehicle front-rear direction protrudes downward in the vehicle, and forms a closed cross section that extends in the vehicle width direction when being joined to a lower surface of the roof panel 3.

The roof trim 4 is an interior member that is provided to cover the roof panel 3 from the inside of the cabin. As illustrated in FIG. 2, in this roof trim 4, an overhead console 4a that accepts various operations by the occupant is disposed substantially near a center in the vehicle width direction.

Here, the rear-view mirror 5 is an automatic anti-glare rear-view mirror that detects light and automatically adjusts brightness thereof, and is disposed substantially at the center in the vehicle width direction. As illustrated in FIG. 2, this rear-view mirror 5 is formed in a shape that has a front surface in a substantially arcuate shape in a bottom view that protrudes forward in the vehicle and a rear surface including a substantially flat mirror surface 5a that opposes the occupant seated on the front seat.

More specifically, as illustrated in FIGs. 2 and 3, the rear-view mirror 5 is disposed to oppose a cover rear wall portion 64 of the auxiliary cover 60, which will be described below, in the vehicle front-rear direction and such that the substantial center of the mirror surface 5a in the vehicle width direction is located at substantially the same position as a front end of the roof trim 4 in the vehicle front-rear direction.

In the rear-view mirror 5, an opening, to which the mirror support structure 20 described below is fitted, is formed substantially at the center in the width direction of the front surface, and a wire harness 7 (see FIG. 3) that is led out in the vehicle front direction via the opening is provided.

Furthermore, as illustrated in FIGs. 1 and 2, the above-described vehicle 1 includes, as a part of a driving assistance system that assists with a driving operation by a driver, an auxiliary device 8 detecting a situation in front of the vehicle is provided substantially at the center in the vehicle width direction of an inner surface upper portion of the windshield glass 2.

As illustrated from FIG. 3 to FIG. 5, this auxiliary device 8 includes a bracket 10 that is fixed to the inner surface of the windshield glass 2, as well as the mirror support structure 20, the camera unit 31, a rain sensor 32, and a communication antenna 33 that are fixed to the bracket 10.

Furthermore, as illustrated in FIG. 6, the auxiliary device 8 includes four wire harnesses as well as the cover member 50 that integrally covers the bracket 10, the mirror support structure 20, the camera unit 31, the rain sensor 32, the communication antenna 33, and the four wire harnesses.

First, as illustrated in FIGs. 4 and 5, the bracket 10 is fixedly bonded to the inner surface of the windshield glass 2 by using a thermosetting adhesive such that a rear end thereof is located at a position with a predetermined distance on a vehicle front side from the front edge 6a of the front header 6.

As illustrated in FIGs. 3 and 4, the mirror support structure 20 is a support member that supports the rear-view mirror 5 with a ball joint structure. In the auxiliary device 8, this mirror support structure 20 is fixed to substantially the center in the vehicle width direction of a rear portion of the bracket 10.

The camera unit 31 includes a lens, an image sensor, and the like, and also includes, on a rear surface, a connector (not denoted by a reference sign), to which the camera wire harness 42 described below is connected. As illustrated in FIGs. 3 and 6, in the auxiliary device 8, this camera unit 31 is disposed at a position that is at the substantially center in the vehicle width direction and on the vehicle front side of the mirror support structure 20.

Furthermore, the rain sensor 32 includes an element detecting rain drops adhering to the windshield glass 2, a casing, and the like, and also includes, on a rear surface, a connector (not denoted by a reference sign), to which a sensor wire harness 43 described below is connected. As illustrated in FIG. 6, in the auxiliary device 8, this rain sensor 32 is disposed on the right side of the mirror support structure 20 in the vehicle width direction.

The communication antenna 33 is a V2X antenna, for example, and includes, on a rear surface, a connector (not denoted by a reference sign) to which an antenna wire harness 44 described below is connected. As illustrated in FIG. 6, in the auxiliary device 8, this communication antenna 33 is disposed on the left side of the mirror support structure 20 in the vehicle width direction.

As illustrated in FIGs. 4 and 6, the four wire harnesses include: a mirror wire harness 41 that is connected to the wire harness 7 led out of the rear-view mirror 5; the camera wire harness 42 that is connected to the camera unit 31; the sensor wire harness 43 that is connected to the rain sensor 32; and the antenna wire harness 44 that is connected to the communication antenna 33.

As illustrated in FIG. 6, these four wire harnesses are gathered on the vehicle rear side of the mirror support structure 20, and are routed substantially linearly in a plan view toward the vehicle lower side of the front header 6.

As illustrated in FIGs. 3, 5, and 7, the cover member 50 has a box shape that is opened to a vehicle upper side, and is substantially formed in a T shape in the plan view by a portion that is long in the vehicle width direction and has a substantially rectangular shape in the plan view and a portion that is long in the vehicle front-rear direction and has a substantially rectangular shape in the plan view.

As illustrated in FIGs. 1 and 5, in the upper portion of the windshield glass 2, such the auxiliary device 8 forms a transmission region E by exposing a portion adjacent to the front edge 6a of the front header 6 and thereby allows the occupant who is seated on the front seat to visually recognize the situation in front of the vehicle.

Next, the above-described auxiliary device 8 will further be described in detail.

As illustrated in FIG. 5, the bracket 10 includes a mirror bracket 11, to which the mirror support structure 20 is fixed, the camera bracket 12, to which the camera unit 31 and the communication antenna 33 are fixed, and a sensor bracket 13, to which the rain sensor 32 is fixed.

More specifically, as illustrated in FIG. 5, the mirror bracket 11 is fixed to a position that is located substantially at the center in the vehicle width direction in the plan view and is located with a predetermined distance on the vehicle front side from the front edge 6a of the front header 6.

As illustrated in FIGs. 3 and 5, this mirror bracket 11 is integrally formed by: a disc-shaped portion (not denoted by a reference sign) that is substantially disc-shaped and is fixedly joined to the windshield glass 2; and a substantially columnar fitted portion (not denoted by a reference sign) that has a slightly smaller diameter than the disc-shaped portion and extends in the vehicle down direction, and to which the mirror support structure 20 is fitted.

As illustrated in FIG. 5, the camera bracket 12 is formed to have an outer shape that is long in the vehicle width direction, substantially rectangular in the plan view, and is slightly smaller than an inner surface shape of the cover member 50 (the auxiliary cover 60 of the cover member 50, which will be described below).

Furthermore, as illustrated in FIG. 5, the camera bracket 12 is formed with a rear cutout portion 12a for exposing the mirror bracket 11 and a right cutout portion 12b for exposing the rain sensor 32.

As illustrated in FIG. 5, the rear cutout portion 12a is formed by cutting out a portion on the vehicle front side from a rear end of the camera bracket 12 in a substantially circular shape in the plan view that is a circle substantially coaxial with the mirror bracket 11 and has a slightly larger diameter than the mirror bracket 11.

Here, the rear cutout portion 12a is cut out such that a rear end of a body portion 121 described below is located on the vehicle rear side of a center in a radial direction of the mirror bracket 11.

As illustrated in FIG. 5, the right cutout portion 12b is formed by a range along a tip edge of the body portion 121, which will be described below, from an edge on the right side in the vehicle width direction of the camera bracket 12 in a substantially rectangular shape in the plan view that is slightly larger than the rain sensor 32.

In detail, as illustrated in FIGs. 4 and 5, the camera bracket 12 is integrally formed by the body portion 121 in a flat plate shape, to which the camera unit 31 and the communication antenna 33 are fixed, and a hood portion 122 in a substantially triangular shape in the plan view that is stepped down in the vehicle from the body portion 121.

As illustrated in FIGs. 3 and 5, the body portion 121 of the camera bracket 12 has the substantially flat plate shape along the inner surface of the windshield glass 2, and is formed with the rear cutout portion 12a for exposing the mirror bracket 11 and the right cutout portion 12b for exposing the rain sensor 32 described above.

Furthermore, although not illustrated in detail, the lower surface of the body portion 121 is provided with: a portion that is located between the rear cutout portion 12a and the right cutout portion 12b and, to which a connector 7a of the wire harness 7 led out from the rear-view mirror 5 is locked; and a portion that is located away from an edge on the left side in the vehicle width direction with a predetermined distance on the right side in the vehicle width direction and, to which the communication antenna 33 is locked.

In addition, as illustrated in FIG. 4, on a lower surface of the body portion 121, a camera attachment portion 123 for attaching the camera unit 31, is integrally formed at a position that is located on the vehicle front side of the rear cutout portion 12a and is located on the vehicle front side with a predetermined distance from the mirror support structure 20.

This camera attachment portion 123 is a plate member that opposes in the vehicle width direction with a predetermined distance, and is formed in a shape with which the camera unit 31 is engaged.

Furthermore, as illustrated in FIG. 8, the camera attachment portion 123 is formed to hold the camera unit 31 at a position at which a space, in which a worker can hold and connect a connector 42a with his/her fingers when the worker connects the connector 42a of the camera wire harness 42 described below to the camera unit 31, can be secured with a front edge of a mirror support columnar portion 21 of the mirror support structure 20 described below.

Meanwhile, as illustrated in FIGs. 4 and 5, the hood portion 122 of the camera bracket 12 is formed by stepping down a range, which is located from a front end of the camera bracket 12 to the camera attachment portion 123, in a substantially triangular shape in the plan view in which a vertex is located on the vehicle rear side.

Furthermore, in the hood portion 122, a camera opening 12c for exposing a front end of the camera unit 31, to which the camera attachment portion 123 is attached, is formed to be opened near the vertex of the substantially triangular shape in the plan view. This camera opening 12c is formed to be opened in a substantially rectangular shape in a front view that penetrates in the vehicle front-rear direction.

As illustrated in FIG. 5, the sensor bracket 13 has substantially a plate shape along the inner surface of the windshield glass 2, and is formed in a substantially annular shape in the plan view that has an opening for exposing a central portion of the rain sensor 32 in the plan view.

Here, the sensor bracket 13 is formed in a substantially similar shape whose outer shape is slightly smaller than an outer shape of the rain sensor 32.

In addition, as illustrated in FIG. 8, the mirror support structure 20 is formed in a shape capable of securing a space, in which the connector 42a of the camera wire harness 42 is exposed and the worker can hold and connect the connector 42a of the camera wire harness 42 with his/her fingers to the camera unit 31, with a rear end of the camera unit 31.

More specifically, as illustrated in FIGs. 9 and 10(a), the mirror support structure 20 is integrally formed by: the mirror support columnar portion 21 that has a columnar body extending in the vehicle down direction from an upper end, which is fixedly fitted to the mirror bracket 11; and a mirror arm portion 26 that opposes an opening on a front surface of the rear-view mirror 5 and extends in the vehicle rear direction from a lower portion of the mirror support columnar portion 21.

As illustrated in FIG. 10, the mirror support columnar portion 21 of the mirror support structure 20 is integrally formed by a substantially cylindrical upper portion and a box-shaped lower portion, the vehicle front side of which is opened, and which has a substantially rectangular shape in the front view.

In detail, as illustrated in FIG. 10, the mirror support columnar portion 21 is integrally formed by: a substantially cylindrical fitting portion 22 that extends in the vehicle up-down direction; a pair of side wall portions 23 that extend in the vehicle down direction from both ends of the fitting portion 22 in the vehicle width direction; a bottom plate portion 24 that couples lower ends of the side wall portions 23 in the vehicle width direction; and a rear wall portion 25 that couples rear ends of the side wall portions 23 in the vehicle width direction.

As illustrated in FIG. 9, the fitting portion 22 of the mirror support columnar portion 21 has an inner circumferential surface in a shape that is fitted to an outer circumferential surface of the above-described mirror bracket 11, and is formed in a bottomed cylindrical shape in which an opening on the vehicle lower side is closed.

In addition, as illustrated in FIG. 10(b), the pair of side wall portions 23 of the mirror support columnar portion 21 each have a substantially flat plate shape that is thick in the vehicle width direction, and is formed at positions with a predetermined distance from each other in the vehicle width direction.

As illustrated in FIG. 9, in the side view, this side wall portion 23 has: a substantially vertical rear edge; and a front edge that is inclined substantially linearly such that a lower end is located on the vehicle rear side of an upper end, and is formed in an inverted trapezoidal shape, in which a lower edge is a short side, in the side view.

In other words, in the side view, the side wall portion 23 is formed in the shape having the front edge that is separated in the vehicle rear direction from the camera unit 31 from the vehicle upper side toward the vehicle lower side.

Furthermore, as illustrated in FIG. 10(a), in a lower portion of the right side wall portion 23 in the vehicle width direction, a clamp attachment hole 23a that penetrates along the vehicle width direction and, to which a clamp C (see FIG. 4) for regulating a position of the wire harness 7 is attached, is opened.

As illustrated in FIG. 10(b), the bottom plate portion 24 of the mirror support columnar portion 21 has a plate shape that is thick in the up-down direction, and couples the lower ends of the side wall portions 23 in a manner to couple, in the vehicle width direction, the short sides of the substantially trapezoidal shapes of the side wall portions 23 in the side view.

As illustrated in FIGs. 9 and 10, the rear wall portion 25 of the mirror support columnar portion 21 has a plate shape that is thick in the vehicle front-rear direction, and is provided to close an opening on the vehicle rear side that is formed by the fitting portion 22, the pair of side wall portions 23, and the bottom plate portion 24.

As illustrated in FIGs. 9 and 10, in an upper portion of this rear wall portion 25, a substantially circular through hole 25a is opened to penetrate from the vehicle front side toward the vehicle rear and vehicle upper sides along a boundary with the fitting portion 22 in a manner to be provided across the fitting portion 22.

The mirror support columnar portion 21 forms an opening 21a, through which the camera wire harness 42 is inserted, by an opening that has a substantially rectangular shape in the front view and is surrounded by the fitting portion 22, the pair of side wall portions 23, and the bottom plate portion 24 and by the through hole 25a of the rear wall portion 25.

As illustrated in FIG. 3, the opening 21a of this mirror support columnar portion 21 is provided as a routing path for routing the camera wire harness 42 along the vehicle front-rear direction, and is formed as an accommodation space for accommodating a rear portion of the connector 42a of the camera wire harness 42.

Meanwhile, as illustrated in FIG. 10(a), the mirror arm portion 26 of the mirror support structure 20 extends in the vehicle rear direction from the position on the vehicle lower side of the through hole 25a of the mirror support columnar portion 21.

As illustrated in FIG. 10(a), this mirror arm portion 26 includes: a columnar portion 27 that has a substantially columnar shape and extends in the vehicle rear direction from the rear wall portion 25 of the mirror support columnar portion 21; and a spherical portion 28 that has a substantially spherical shape and is provided at a tip of the columnar portion 27.

Furthermore, as illustrated in FIG. 9, in the mirror arm portion 26, an arm portion through hole 26a that penetrates along an axial direction of the columnar portion 27 and communicates with the opening 21a of the mirror support columnar portion 21 is opened.

This arm portion through hole 26a is formed as an insertion hole, through which the wire harness 7 led out from the rear-view mirror 5 is inserted.

As illustrated in FIG. 9, at the position on the vehicle front side of the above-described mirror support structure 20, the camera unit 31 is attached to the camera attachment portion 123 of the camera bracket 12.

This camera unit 31 is connected to an electronic control unit, which is not illustrated, via the camera wire harness 42, and has a function to receive incident light transmitted through the windshield glass 2 and a function to convert the received incident light into an electric signal to be output to the electronic control unit.

Here, the electronic control unit is an information processing unit that processes various types of information and is disposed in the cabin, and is configured to generate a moving image showing the situation in front of the vehicle on the basis of the electric signal from the camera unit 31 and to execute various types of processing based on the generated moving image.

In addition, the rain sensor 32 is connected to the electronic control unit, which is not illustrated, via the sensor wire harness 43, and has a function to detect an amount of raindrops adhering to the windshield glass 2 and a function to output a signal indicating the detected amount of raindrops to the electronic control unit.

The communication antenna 33 is connected to the electronic control unit, which is not illustrated, via the antenna wire harness 44, and has a function to exchange various types of information through communication with another vehicle or with an infrastructure facility therearound.

As illustrated in FIG. 6, the rain sensor 32 and the communication antenna 33 are aligned in the vehicle width direction with the mirror support structure 20 being interposed therebetween, and are disposed such that rear ends thereof are located substantially at the same positions in the vehicle front-rear direction at the center in the vehicle front-rear direction of the mirror bracket 11.

As illustrated in FIG. 6, of the four wire harnesses, the mirror wire harness 41 is a wire harness that has, at a tip, a connector 41a connected to the wire harness 7 led out from the rear-view mirror 5.

Here, as illustrated in FIGs. 4 and 6, the wire harness 7 that is led out from the rear-view mirror 5 is led out to the vehicle front side of the mirror support structure 20 through the arm portion through hole 26a, and, on the vehicle lower side of the camera unit 31, is routed to be bent in the vehicle rear direction.

Furthermore, in the wire harness 7, which is bent in the vehicle rear direction, the connector 7a provided at the tip is locked to the camera bracket 12 at a position between the camera unit 31 and the rain sensor 32.

Meanwhile, as illustrated in FIG. 6, the mirror wire harness 41 is routed in the vehicle rear direction from the connector 41a that is connected to the connector 7a of the wire harness 7, and is then routed to the vehicle rear side of the mirror support structure 20 along the auxiliary cover 60 of the cover member 50 described below.

As illustrated in FIGs. 3 and 4, of the four wire harnesses, the camera wire harness 42 is a wire harness that has, at a tip, the connector 42a for connecting a connector (not denoted by a reference sign) of the camera unit 31.

As illustrated in FIGs. 3 and 6, this camera wire harness 42 is routed from the camera unit 31 to the vehicle rear side of the mirror support structure 20 through the opening 21a of the mirror support structure 20, and is then routed in the vehicle up direction along the auxiliary cover 60 of the cover member 50 described below.

As illustrated in FIG. 6, of the four wire harnesses, the sensor wire harness 43 is a wire harness that has, at a tip, a connector 43a connected to a connector (not denoted by a reference sign) of the rain sensor 32.

As illustrated in FIG. 6, this sensor wire harness 43 is routed in the vehicle rear direction from the rain sensor 32, and is then routed to the vehicle rear side of the mirror support structure 20 along the auxiliary cover 60 of the cover member 50 described below.

As illustrated in FIG. 6, of the four wire harnesses, the antenna wire harness 44 is a wire harness that has, at a tip, a connector 44a connected to a connector (not denoted by a reference sign) of the communication antenna 33.

As illustrated in FIG. 6, this antenna wire harness 44 is routed in the vehicle rear direction from the communication antenna 33, and is then routed to the vehicle rear side of the mirror support structure 20 along the auxiliary cover 60 of the cover member 50 described below.

Then, the four wire harnesses are gathered at the position on the vehicle rear side of the mirror support structure 20, and is routed substantially linearly in the plan view in the vehicle rear direction along the inner surface of the windshield glass 2 while the positions thereof being regulated by a harness cover 70 of the cover member 50 described below.

As illustrated in FIGs. 3 and 6, the cover member 50 is integrally formed by: the auxiliary cover 60 that integrally covers the camera unit 31, the rain sensor 32, and the communication antenna 33 fixed to the bracket 10; and the harness cover 70 that covers the four wire harnesses led out to the outside from the auxiliary cover 60.

Although not illustrated in detail, the cover member 50 is fixedly attached to the camera bracket 12 of the bracket 10.

As illustrated in FIGs. 6 and 7, the auxiliary cover 60 is a cover that has a substantially rectangular shape in the plan view and is disposed on the vehicle front side with a predetermined distance in the vehicle front direction from the front edge 6a of the front header 6, and is formed in a shape that bulges in the vehicle down direction with respect to the inner surface of the windshield glass 2.

As illustrated in FIG. 6, in the rear portion of this auxiliary cover 60, a routing space for guiding the mirror wire harness 41, the sensor wire harness 43, and the antenna wire harness 44 to the vehicle rear side of the mirror support structure 20 is formed.

In detail, as illustrated in FIGs. 9 and 11, the auxiliary cover 60 is formed substantially in a box shape, the vehicle upper side of which is opened, by: a cover bottom portion 61 that has a substantially flat plate shape and, at a position with a predetermined distance in the vehicle down direction, opposes the inner surface of the windshield glass 2; a cover front wall portion 62 that extends in the vehicle up direction from an edge of the cover bottom portion 61; a pair of cover side wall portions 63; and the cover rear wall portion 64.

As illustrated in FIG. 9, the cover bottom portion 61 is a plate shape whose thickness direction is the vehicle up-down direction and that has a substantially trapezoidal shape in the plan view with a rear edge thereof being a short side, and is formed to be located at a position on the vehicle lower side of the opening on the front surface of the rear-view mirror 5.

Here, the cover bottom portion 61 is disposed such that a main surface thereof is substantially parallel to the vehicle front-rear direction.

As illustrated in FIG. 9, the cover front wall portion 62 is formed in a substantially flat plate shape that extends in the vehicle front and up directions from a front edge of the cover bottom portion 61. In this cover front wall portion 62, a plurality of slit-shaped openings (not denoted by a reference sign) that extends along the vehicle width direction is formed at predetermined intervals in the vehicle up-down direction.

As illustrated in FIGs. 7 and 11, the pair of cover side wall portions 63 extend in the vehicle up direction and to the outer side in the vehicle width direction from both edges in the vehicle width direction of the cover bottom portion 61. As illustrated in FIG. 11, this cover side wall portion 63 is formed such that a rear end thereof is located at the substantially same position in the vehicle front-rear direction as a center in the vehicle front-rear direction of the mirror bracket 11 in the plan view.

As illustrated in FIG. 9, between the front surface of the rear-view mirror 5 and the mirror support columnar portion 21 of the mirror support structure 20, the cover rear wall portion 64 extends in the vehicle up direction from the rear edge of the cover bottom portion 61 in a manner to oppose the front surface of the rear-view mirror 5.

As illustrated in FIG. 11, this cover rear wall portion 64 is formed in a shape that has a vertex substantially near the center in the vehicle width direction in the plan view and in which the vertex protrudes in the vehicle rear direction from a rear end of the cover side wall portion 63.

Accordingly, in the plan view, together with a virtual straight line V (see FIG. 11) that is parallel to the vehicle width direction passing through the rear end of the cover side wall portion 63, the cover rear wall portion 64 forms a substantially triangular space in the plan view on the rear side of the auxiliary cover 60.

Here, as illustrated in FIG. 12, the cover rear wall portion 64 protrudes in the vehicle rear direction in a manner not to overlap a swing range of the rear-view mirror 5 in a bottom view when the rear-view mirror 5 swings.

In detail, as illustrated in FIG. 11, the cover rear wall portion 64 includes: a vertex portion 641 that is the vertex of the substantially triangular shape in the plan view; and a pair of first oblique side portions 642 and a pair of second oblique side portions 643, each of which extends to the outer side in the vehicle width direction and in the vehicle front direction from both ends in the vehicle width direction of the vertex portion 641 and is oblique sides forming the substantially triangular shape in the plan view.

As illustrated in FIG. 9, the vertex portion 641 of the cover rear wall portion 64 has a flat plate shape that is thick in the vehicle front-rear direction, and is formed on the vehicle rear side to be closer to the mirror support columnar portion 21 of the mirror support structure 20 in the vertical cross section along the vehicle front-rear direction.

Furthermore, in this vertex portion 641, a lead-out hole 60a that communicates with the inside of the harness cover 70 is opened in an upper portion, and an arm portion insertion hole 60b, into which the mirror arm portion 26 of the mirror support structure 20 is inserted, is opened in a lower side.

Here, the lead-out hole 60a is formed in a size in which the four wire harnesses in a bundled state can be led out to the outside.

As illustrated in FIG. 11, in the plan view, the pair of first oblique side portions 642 of the cover rear wall portion 64 extends outward in the vehicle width direction and in the vehicle front direction from both ends of the vertex portion 641 in the vehicle width direction such that tips thereof is located near the outer side in the vehicle width direction of the mirror bracket 11.

As illustrated in FIG. 11, in the plan view, the pair of second oblique side portions 643 of the cover rear wall portion 64 extends outward in the vehicle width direction and in the vehicle front direction from the tips on the outer side in the vehicle width direction of the first oblique side portions 642, and is then coupled to the rear ends of the cover side wall portions 63.

In a clockwise direction in the plan view with the rear end of the cover side wall portion 63 being a center, the first oblique side portion 642 and the second oblique side portion 643 described above are formed such that an angle of the first oblique side portion 642 with respect to the virtual straight line V along the vehicle width direction is a larger angle than an angle of the second oblique side portion 643 with respect to the virtual straight line V along the vehicle width direction.

As illustrated in FIG. 11, on the vehicle rear side of the rain sensor 32 and the communication antenna 33, with the thus-configured cover rear wall portion 64, the auxiliary cover 60 forms the routing space for guiding the mirror wire harness 41, the sensor wire harness 43, and the antenna wire harness 44 substantially to the center in the vehicle width direction.

Meanwhile, as illustrated in FIGs. 9 and 11, the harness cover 70 of the cover member 50 is formed to have a cross section in a substantially concave groove shape that extends in the vehicle front-rear direction along the inner surface of the windshield glass 2 and whose vehicle upper side is opened.

The harness cover 70 is formed in a length in the vehicle front-rear direction from the cover rear wall portion 64 of the auxiliary cover 60 to the flange portion of the front header 6.

More specifically, the harness cover 70 is formed in the length that is narrower than a length in the vehicle width direction of the auxiliary cover 60 and that is shorted than the length in the up-down direction of the auxiliary cover 60.

As illustrated in FIGs. 6 and 11, an internal space of this harness cover 70 communicates with the lead-out hole 60a of the auxiliary cover 60, and is formed in a size capable of accommodating the four wire harnesses gathered substantially at the center in the vehicle width direction.

In this way, in the auxiliary structure for the vehicle windshield, by inserting the camera wire harness 42 through the opening 21a of the mirror support structure 20, the mirror support structure 20 and the camera unit 31 can be disposed along the vehicle front-rear direction, and the camera wire harness 42 can be routed substantially linearly in the plan view.

Furthermore, in the auxiliary structure for the vehicle windshield, the mirror wire harness 41, the sensor wire harness 43, and the antenna wire harness 44 are gathered substantially at the center in the vehicle width direction by the cover member 50, and can be routed toward the front header 6.

As it has been described so far, the auxiliary structure for the vehicle windshield in the present embodiment is a structure of the auxiliary device 8 that is fixed to the inner surface upper portion of the windshield glass 2 of the vehicle 1.

This auxiliary structure for the vehicle windshield includes: the bracket 10 that is fixed to the inner surface of the windshield glass 2 at the position with the predetermined distance on the vehicle front side from the front header 6 of the vehicle 1; and the mirror support structure 20 that is fixed to the bracket 10 and supports the rear-view mirror 5.

Furthermore, the auxiliary structure for the vehicle windshield includes the rain sensor 32 and the communication antenna 33 that are aligned in the vehicle width direction with the mirror support structure 20 being interposed therebetween and are fixed to the bracket 10.

Moreover, the auxiliary structure for the vehicle windshield includes: the sensor wire harness 43 that extends in the vehicle rear direction from the rain sensor 32 and is routed toward the vehicle lower side of the front header 6; and the antenna wire harness 44 that extends in the vehicle rear direction from the communication antenna 33 and is routed toward the vehicle lower side of the front header 6.

In addition, the auxiliary structure for the vehicle windshield includes: the auxiliary cover 60 that is attached to the bracket 10 and integrally covers the mirror support structure 20, the rain sensor 32, and the communication antenna 33; and the harness cover 70 that has the substantially concave groove shape, extends in the vehicle front-rear direction from the auxiliary cover 60 to the front header 6 and accommodates the sensor wire harness 43 and the antenna wire harness 44.

Then, the auxiliary cover 60 includes the cover rear wall portion 64 that is formed in the shape protruding in the vehicle rear direction with substantially the same position in vehicle width direction as the mirror support structure 20 being the vertex and in which the lead-out hole 60a for leading the sensor wire harness 43 and the antenna wire harness 44 to the harness cover 70 is provided in the vertex portion 641.

According to this configuration, since the lead-out hole 60a is provided in the vertex portion 641 of the cover rear wall portion 64 that is formed in the shape protruding in the vehicle rear direction, the sensor wire harness 43 and the antenna wire harness 44, each of which respectively extend from the rain sensor 32 and the communication antenna 33 that are aligned in the vehicle width direction with the mirror support structure 20 being interposed therebetween, can be gathered on the vehicle rear side of the mirror support structure 20 and led out to the harness cover 70.

Thus, compared to a case where the sensor wire harness 43 and the antenna wire harness 44 are routed substantially linearly in the plan view from the rain sensor 32 and the communication antenna 33 toward the front header 6, in the auxiliary structure for the vehicle windshield, the length in the vehicle width direction of the harness cover 70 can be reduced significantly.

In this way, in the auxiliary structure for the vehicle windshield, not only the transmission region E can be formed in the windshield glass 2 between the auxiliary cover 60 and the front header 6 in the manner to be adjacent to the harness cover 70 in the vehicle width direction and formed to allow the occupant who is seated on the front seat to visually recognize the situation in front of the vehicle, but also the large transmission region E can be secured.

As a result, compared to a case where the cover rear wall portion is located near the front header 6, in the auxiliary structure for the vehicle windshield, it is possible to reduce the feeling of pressure given to the occupant by the transmission region E and to secure the wide field of view of the occupant.

In addition, in the auxiliary structure for the vehicle windshield, the sensor wire harness 43 and the antenna wire harness 44 can be gathered at substantially the same positions in the vehicle width direction in the mirror support structure 20. Thus, it is possible to set substantially the same routing paths of the sensor wire harness 43 and the antenna wire harness 44 in a right-hand drive vehicle and a left-hand drive vehicle and to share the components among the right-hand drive vehicle and the left-hand drive vehicle.

Furthermore, the auxiliary structure for the vehicle windshield includes: the camera unit 31 that is disposed on the vehicle front side of the mirror support structure 20 and is fixed to the bracket 10; and the camera wire harness 42 that is connected to the camera unit 31 from the vehicle rear side and is accommodated in the harness cover 70 via the lead-out hole 60a.

Moreover, the mirror support structure 20 includes the mirror support columnar portion 21 that extends in the vehicle down direction from the upper end fixed to the bracket 10. This mirror support columnar portion 21 is configured to include the opening 21a that is formed by penetrating along the vehicle front-rear direction.

Then, the camera wire harness 42 is configured to be routed from the vehicle front side of the mirror support columnar portion 21 to the vehicle rear side of the mirror support columnar portion 21 through the opening 21a.

According to this configuration, since the camera wire harness 42, which is connected to the camera unit 31, is routed in the vehicle rear direction via the opening 21a of the mirror support columnar portion 21, not only the camera wire harness 42 can be routed substantially linearly in the plan view, but also the camera unit 31, the mirror support structure 20, and the camera wire harness 42 can be disposed on the substantially straight line in the plan view along the vehicle front-rear direction.

In this way, in the auxiliary structure for the vehicle windshield, the camera unit 31 can be disposed near the mirror support columnar portion 21 of the mirror support structure 20 in the vehicle front-rear direction. Thus, it is possible to dispose the camera unit 31 and the camera wire harness 42 on the upper portion of the windshield glass 2 without enlarging the auxiliary cover 60.

Thus, the auxiliary structure for the vehicle windshield can achieve multi-functionality with the rain sensor 32, the communication antenna 33, and the camera unit 31 while simultaneously reducing the feeling of pressure given to the occupant and securing the field of view of the occupant.

The mirror support structure 20 includes: the mirror support columnar portion 21 that extends in the vehicle down direction from the upper end fixed to the bracket 10; and the mirror arm portion 26 that extends in the vehicle rear direction from the mirror support columnar portion 21 and supports the rear-view mirror 5 in a freely swingable manner.

The cover rear wall portion 64 is formed in the shape that does not overlap the swing range of the rear-view mirror 5 centered on the coupling portion with the mirror arm portion 26 of the mirror support structure 20 in the plan view, and is formed with the arm portion insertion hole 60b, through which the mirror arm portion 26 of the mirror support structure 20 is inserted, in the lower portion of the vertex portion 641.

According to this configuration, since the arm portion insertion hole 60b is formed in the lower portion of the vertex portion 641 in the cover rear wall portion 64, the cover rear wall portion 64 of the auxiliary cover 60 can be disposed to oppose the rear-view mirror 5 in the vehicle front-rear direction. As a result, in the auxiliary structure for the vehicle windshield, the auxiliary cover 60 is suppressed from protruding in the vehicle down direction from the lower end of the rear-view mirror 5.

As a result, in the auxiliary structure for the vehicle windshield, since the auxiliary cover 60 is less likely to enter the field of view of the occupant, it is possible to stably reduce the feeling of pressure given to the occupant and to secure the wide field of view of the occupant.

In addition, the cover rear wall portion 64 is located on the vehicle front side of the rear-view mirror 5. Accordingly, compared to a case where the cover rear wall portion 64 is located at substantially the same position as the rear-view mirror 5 in the vehicle front-rear direction, in the auxiliary structure for the vehicle windshield, it is possible to secure the large transmission region E that is formed in the windshield glass 2.

In correspondence between the configuration of the invention and the above-described embodiment, the plurality of electronic devices and the first electronic device in the invention correspond to the rain sensor 32 and the communication antenna 33 in the embodiment. Hereinafter, similarly, the plurality of wire harnesses and the first wire harnesses correspond to the sensor wire harness 43 and the antenna wire harness 44, the vertex corresponds to the vertex portion 641, the second electronic device corresponds to the camera unit 31, and the second wire harness corresponds to the camera wire harness 42. However, the invention is not limited only to the configuration in the above-described embodiment, and many embodiments can be obtained.

For example, in the above-described embodiment, the cross-sectional shape of the front header 6 in the vertical cross section along the vehicle front-rear direction is the substantially hat-shaped cross section. However, the invention is not limited thereto, and the cross-sectional shape of the front header in the vertical cross section along the vehicle front-rear direction may be a closed cross-sectional shape.

In this case, the front header may include: a lower panel that has a substantially hat-shaped cross section and protrudes in the vehicle down direction; and an upper panel that is located on the vehicle upper side of the lower panel, has a substantially hat-shaped cross section, and protrudes in the vehicle up direction, for example.

The mirror bracket 11 and the camera bracket 12 are formed as separate bodies. However, the invention is not limited thereto, and the mirror bracket 11 and the camera bracket 12 may be integrally formed as a bracket.

The mirror bracket 11, the camera bracket 12, and the sensor bracket 13 are formed as separate bodies. However, the invention is not limited thereto, and the mirror bracket 11, the camera bracket 12, and the sensor bracket 13 may be integrally formed as a bracket.

The electronic control unit that generates the moving image showing the situation in front of the vehicle is adopted as the camera unit 31 provided separately. However, the invention is not limited thereto. In the camera unit, a control section that generates the moving image showing the situation in front of the vehicle from the electric signal based on the received incident light may integrally be provided.

It is configured that the two electronic devices, which are the rain sensor 32 and the communication antenna 33, are aligned in the vehicle width direction with the mirror support structure 20 being interposed therebetween. However, the invention is not limited thereto, and it may be configured that three or more electronic devices are aligned in the vehicle width direction with the mirror support structure 20 being interposed therebetween.

The description has been made by using the camera unit 31, the rain sensor 32, and the communication antenna 33 as the electronic devices that are fixed to the bracket 10. However, the invention is not limited thereto, and an appropriate electronic device may be used as long as the electronic device is fixed to the bracket 10. For example, the electronic device may be a Global Navigation Satellite System (GNSS) antenna that receives a GNSS signal from the GNSS, a camera unit other than the camera unit 31, or the like.

The mirror support columnar portion 21 has such a shape that the front edge of the side wall portion 23 is inclined substantially linearly. However, the invention is not limited thereto. The front edge of the side wall portion 23 may have a curved shape that protrudes in the vehicle rear direction in the side view, for example, as long as being shaped to separate in the vehicle rear direction from the camera unit 31 in the side view.

In addition to the camera bracket 12, a bracket for attaching the harness cover 70 may be provided.

The cover member 50 is formed by integrating the auxiliary cover 60 and the harness cover 70. However, the invention is not limited thereto, and such a cover member may be adopted that the auxiliary cover 60 and the harness cover 70 are formed separately.

The cover rear wall portion 64 of the auxiliary cover 60 includes: the vertex portion 641 that is substantially triangular in the plan view; and the pair of first oblique side portions 642 and the pair of second oblique side portions 643, each of which is the oblique sides forming the substantially triangular shape in the plan view. However, the invention is not limited thereto, and an appropriate shape may be adopted as long as the mirror wire harness 41, the sensor wire harness 43, and the antenna wire harness 44 can be guided substantially to the center in the vehicle width direction.

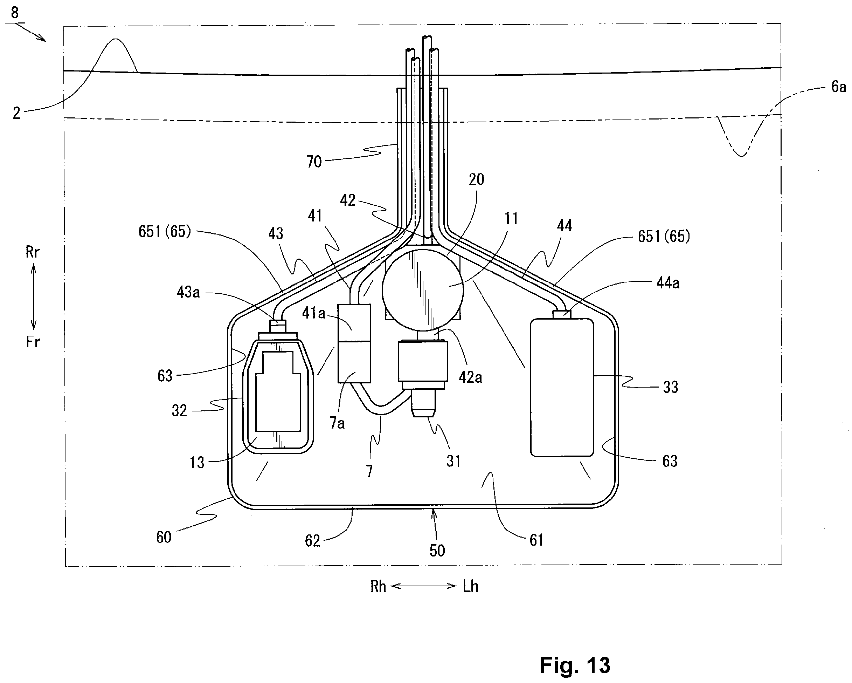

For example, as in FIG. 13 that is a plan view of the auxiliary device 8 in another embodiment, a cover rear wall portion 65 of the auxiliary cover 60 may include: a vertex portion (not illustrated) near the mirror support structure 20; and a pair of oblique side portions 651 that extend substantially linearly in the plan view from both ends in the vehicle width direction of the vertex portion to the rear end of the cover side wall portion 63.

### [Reference Signs List]

1 vehicle
2 windshield glass
5 rear-view mirror
6 front header
8 auxiliary device
10 bracket
20 mirror support structure
21 mirror support columnar portion
21a opening
26 mirror arm portion
31 camera unit
32 rain sensor
33 communication antenna
42 camera wire harness
43 sensor wire harness
44 antenna wire harness
60 auxiliary cover
60a lead-out hole
60b arm portion insertion hole
64, 65 cover rear wall portion
70 harness cover
641 vertex portion

## Claims

1. An auxiliary structure for a vehicle windshield that is configured to be fixed as an auxiliary device (8) to an inner surface upper portion of windshield glass (2) of a vehicle (1), the auxiliary structure for the vehicle windshield comprising:
a bracket (10), at a position with a predetermined distance on a vehicle front side from a front header (6) of the vehicle (1), the bracket (10) being configured to be fixed to an inner surface of the windshield glass (2);
a mirror support structure (20) that is fixed to the bracket (10) and supports a rear-view mirror (5);
a plurality of electronic devices that are aligned in a vehicle width direction with the mirror support structure (20) being interposed therebetween and are fixed to the bracket (10);
a plurality of wire harnesses that extend in a vehicle rear direction from the electronic devices and are routed to a vehicle lower side of the front header (6);
an auxiliary cover (60) that is attached to the bracket (10) and covers the mirror support structure (20) and the electronic devices; and
a harness cover (70) that has a concave groove shape, extends in a vehicle front-rear direction from the auxiliary cover (60) to the front header (6) and accommodates the plurality of wire harnesses, wherein
the auxiliary cover (60) is formed in a shape that protrudes in a vehicle rear direction with substantially the same position in the vehicle width direction as the mirror support structure (20) being a vertex, and includes a cover rear wall portion (64, 65) in which a lead-out hole (60a) for leading the wire harness to the harness cover (70) is provided in the vertex.

2. The auxiliary structure for the vehicle windshield according to claim 1, wherein at least some of the wire harnesses bypass the mirror support structure (20) in the vehicle front-rear direction and extend through at least one passage between the mirror support structure (20) and the vertex.

3. The auxiliary structure for the vehicle windshield according to claim 2, wherein different ones of the wire harnesses bypass the mirror support structure (20) on opposite sides thereof so at least one wire harness bypasses the mirror support structure (20) on a left side and another one of the wire harnesses bypasses the mirror support structure (20) on a right side.

4. The auxiliary structure for the vehicle windshield according to anyone of the preceding claims, in which
the electronic device is set as a first electronic device, and
the wire harness is set as a first wire harness, the auxiliary structure for the vehicle windshield comprising:
a second electronic device that is disposed on a vehicle front side of the mirror support structure (20) and is fixed to the bracket (10); and
a second wire harness that is connected to the second electronic device from the vehicle rear side and is accommodated in the harness cover (70) via the lead-out hole (60a), wherein
the mirror support structure (20) includes a mirror support columnar portion (21) that extends in a vehicle down direction from an upper end fixed to the bracket (10),
the mirror support columnar portion (21) has an opening (21a) that penetrates along the vehicle front-rear direction, and
the second wire harness is routed to the vehicle rear side of the mirror support columnar portion (21) from the vehicle front side of the mirror support columnar portion (21) through the opening (21a).

5. The auxiliary structure for the vehicle windshield according to the preceding claim, wherein the second electronic device includes a camera and the second wire harness is a camera wire harness (42).

6. The auxiliary structure for the vehicle windshield according to anyone of the preceding claims, wherein
the mirror support structure (20) includes: a mirror support columnar portion (21) that extends in a vehicle down direction from an upper end fixed to the bracket (10); and a mirror arm portion (26) that extends in a vehicle rear direction from the mirror support columnar portion (21) and supports the rear-view mirror (5) in a swingable and/or multi-axially pivotable manner, and
the cover rear wall portion (64, 65) is formed in a shape that does not overlap a swing or pivot range of the rear-view mirror (5) centered on a coupling portion with the mirror arm portion (26) of the mirror support structure (20) in a plan view, and is formed with an arm portion insertion hole (60b) through which the mirror arm portion (26) of the mirror support structure (20) is inserted in a lower portion of the vertex.

7. The auxiliary structure for the vehicle windshield according to anyone of the preceding claims, wherein the vertex is restricted to a center portion of the auxiliary cover (60) and/or has a maximum width which is less than 2/3 or ½ of the maximum width of the auxiliary cover (60) in the vehicle width direction.

8. The auxiliary structure for the vehicle windshield according to anyone of claims 1 to 6, wherein the vertex has a maximum width substantially the same as the maximum width of the auxiliary cover (60) in the vehicle width direction and/or extends from rear portions of opposite left and right side walls of the auxiliary cover (60) to the harness cover (70).

9. A vehicle (1) comprising an auxiliary structure for the vehicle windshield as defined in anyone of claims 1 to 8.
